# EUROPÄISCHE PATENTANMELDUNG

(11) **EP 1 375 851 A1**
(43) Veröffentlichungstag der Anmeldung: **02.01.2004**
(21) Anmeldenummer: 03006455.4
(22) Anmeldetag: 21.03.2003
(51) Int. Cl.: F01N 3/08

(54) **Plasmareaktor, Verfahren zu dessen Herstellung und Einrichtung zur Behandlung von Abgasen in Verbrennungsmotoren**

(30) Priorität: 29.06.2002 DE 10229340
(71) Anmelder: ROBERT BOSCH GMBH, 70442 Stuttgart (DE)
(72) Erfinder: Treutler, Christoph, 72827 Wannweil (DE); Hachtel, Andreas, 70771 Leinfelden-Echterdingen (DE); Schulte, Thomas, 70376 Stuttgart (DE); Henke, Sascha, 71263 Weil der Stadt (DE); Hruschka, Martin, 74232 Abstatt-Happenbach (DE); Hasenkox, Ulrich, 71254 Ditzingen (DE); Lucas, Susanne, 70839 Gerlingen (DE)

(57) **Zusammenfassung**

Es wird ein Plasmareaktor (5) und eine Einrichtung zur Behandlung von Abgasen von Verbrennungsmotoren mit dem Plasmareaktor (5) vorgeschlagen, wobei der Plasmaraektor (5) einen Keramikkörper (10) aufweist, der von einer Vielzahl von Kanälen (11,12) durchzogen ist. Durch einen ersten Teil (13) dieser Kanäle (11, 12) ist ein Gas durch den Keramikkörper (10) durchführbar, während ein zweiter Teil (14) der Kanäle (11,12) ein elektrisch leitendes Material (15) derart aufweist, dass über ein Anlegen einer elektrischen Spannung ein Plasma im Inneren der Kanäle (11) des ersten Teils (13) erzeugbar ist. Weiter wird ein Verfahren zur Herstellung eines Plasmareaktors (5) vorgeschlagen, wobei zunächst ein grüner Keramikkörper, der von einer Vielzahl von Kanälen durchzogen ist, hergestellt und zu einem Keramikkörper (10) gesintert wird, und wobei danach in einen zweiten Teil (14) von Kanälen (11,12) in dem Keramikkörper (10) ein elektrisch leitendes Material (15) derart eingebracht wird, dass bei einem Durchführen eines Gases durch einen ersten Teil (13) von Kanälen (11,12) in dem Keramikkörper (10) und einem Anlegen einer elektrischen Spannung ein Plasma im Inneren der Kanäle (11) des ersten Teils (13) erzeugbar ist.

## Beschreibung

Die Erfindung betrifft einen Plasmareaktor, ein Verfahren zu dessen Herstellung sowie eine Einrichtung zur Behandlung von Abgasen von Verbrennungsmotoren mit dem Plasmareaktor nach der Gattung der unabhängigen Ansprüche.

### Stand der Technik

Die Reinigung von Abgasen gewinnt aufgrund gesetzlicher Vorgaben eine immer größere Bedeutung in der Kraftfahrzeugtechnik. Dabei werden zunehmend auch plasmaerzeugende Systeme zur Abgasnachbehandlung in Kraftfahrzeugen entwickelt. Bisher ist jedoch keine großserienfähige Technologie verfügbar.

Aus DE 198 60 460 C2 ist ein rekuperativer Strahlungsbrenner mit einem Brennerkörper in Form eines keramischen monolithischen Wabenkörpers bekannt, der schachbrettartig parallel zueinander verlaufende Kanäle mit rechteckigem oder quadratischem Querschnitt aufweist, die den keramischen Wabenkörper durchqueren. Daneben sind auch bei Katalysatoren der Kraftfahrzeugtechnik wabenartig aufgebaute monolithische Keramikkörper bekannt.

### Vorteile der Erfindung

Der erfindungsgemäße Plasmareaktor hat gegenüber dem Stand der Technik den Vorteil, dass er in einfacher Weise in den Abgasstrang eines Kraftfahrzeuges integriert werden kann und großserientauglich ist. Daneben können mit einem derartigen Plasmareaktor durch die bei Betrieb auftretende Plasmaanregung des durch diesen hindurchgeführten Gases bzw. Abgases chemische Prozesse gefördert werden, die insbesondere in Kombination mit einem konventionellen Katalysator und/oder Partikelfilter eine sehr weit reichende Reinigung bzw. effiziente Behandlung des Abgases beispielsweise in nachgeschalteten Katalysatoren oder Filtern möglichen. Insofern eignet sich der Plasmareaktor vor allem zum Einsatz in einer Einrichtung zur Behandlung von Abgasen von Verbrennungsmotoren und insbesondere in mobilen Systemen, wie sie für Kraftfahrzeuge benötigt werden.

Das erfindungsgemäße Verfahren zur Herstellung eines Plasmareaktors hat gegenüber dem Stand der Technik den Vorteil, dass es auf bereits vorhandene großserientaugliche Fertigungsmethoden zurückgreifen kann.

Vorteilhafte Weiterbildungen der Erfindung ergeben sich aus den in den Unteransprüchen genannten Maßnahmen.

So ist besonders vorteilhaft, wenn der Keramikkörper des Plasmareaktors in Draufsicht eine regelmäßige, insbesondere wabenartige oder schachbrettartige Struktur der Kanäle aufweist, wobei diese Kanäle den bevorzugt monolithisch ausgeführten Keramikkörper durchqueren und parallel zueinander verlaufen.

Weiterhin ist vorteilhaft, wenn diejenigen Kanäle in dem Keramikkörper, die Elektroden zum Zünden bzw. Aufrechterhalten des Plasmas bilden, räumlich mit konstantem Abstand voneinander angeordnet sind, und wenn das zwischen den Elektroden befindliche Dielektrikum bzw. der zwischen den Elektroden befindliche Entladungsspalt für das Plasma, der von einem ersten Teil der den Keramikkörper durchquerenden Kanäle gebildet wird, jeweils eine gleichbleibende Dicke aufweist.

Insofern dient der Keramikkörper einerseits als Stützstruktur und andererseits als Dielektrikum bei der Plasmaerzeugung bzw. Plasmaentladung, wodurch man eine gleichmäßige, dielektrisch behinderte Plasmaentladung erreicht und ein gleichmäßig und kontinuierlich brennendes Plasma erzeugen kann, bei dem beide Elektroden durch ein Dielektrikum abgedeckt sind.

Die Abdeckung der Elektroden bietet überdies einen Schutz der Elektroden in dem nachzubehandelnden Abgas, so dass diese durch das Abgas nicht oder nur vernachlässigbar angegriffen werden.

Die Ansteuerung der Elektroden des Plasmareaktors erfolgt vorteilhaft mit Wechselspannung, beispielsweise einer gepulsten Wechselspannung, wobei bevorzugt eine alternierende oder wechselseitige Kontaktierung der Elektroden oder Elektrodenebenen erfolgt. Dabei kann auf übliche Methoden zur Zündung bzw. Aufrechterhaltung eines Plasmas zurückgegriffen werden.

Hinsichtlich des Einbringens des elektrisch leitenden Materials in den zweiten Teil der Kanäle in den Keramikkörper, die die Elektroden für die Plasmaentladung bilden, ist vorteilhaft, dass hierzu eine Vielzahl von kostengünstigen Verfahren zur Wahl stehen. So kann die Einbringung bzw. Erzeugung der Elektroden, d.h. das Einbringen des elektrisch leitenden Materials in die betreffenden Kanäle, durch Durchsaugen bzw. Einsaugen oder Eindrücken bzw. Einblasen einer insbesondere metallhaltigen Paste oder eines in eine elektrisch leitfähige Keramik überführbaren Schlickers durch den betreffenden Teil der Kanäle und anschließendes Überführen, insbesondere Einbrennen, der in den betreffenden Kanälen haftenden Paste oder des dort haftenden Schlickers zu dem elektrisch leitenden Material erfolgen. Auf diese Weise wird erreicht, dass die betreffenden Kanäle des zweiten Teils der Kanäle mit der Paste oder dem Schlicker auf ihren Innenseiten zumindest weitgehend beschichtet oder damit gefüllt werden.

Ein alternatives, ebenfalls vorteilhaftes Verfahren zum Einbringen des elektrisch leitenden Materials in den zweiten Teil der Kanäle, die als Elektrode für die Plasmaentladung dienen sollen, ist ein temporäres, zumindest einseitiges, vorzugsweise jedoch beidseitiges Verschließen des ersten Teils der Kanäle, in deren Innerem das Plasma gezündet werden soll, und ein anschließendes Eintauchen des Keramikkörpers in eine Lösung oder eine Suspension mit einer in das elektrisch leitfähige Material überführbaren oder dieses enthaltenden Komponente. Nach dem Eintauchen erfolgt dann vorteilhaft ein Einbrennen dieser Komponente zu dem elektrisch leitfähigen Material, oder es erfolgt ein Überführen dieser Komponente in das elektrisch leitende Material auf anderem Wege.

Insgesamt wird durch die vorstehend beschriebenen Verfahren erreicht, dass die Kanäle des zweiten Teils der Kanäle, die die Elektroden bei der Plasmaerzeugung bilden sollen, auf ihrer Innenseite mit dem elektrisch leitfähigen Material insbesondere homogen beschichtet oder gleichmäßig bzw. vollständig damit gefüllt werden.

Das temporäre Verschließen eines Teils der Kanäle erfolgt vorteilhaft mit Hilfe eines Wachses, da sich dieses nach dem Einbringen des elektrisch leitfähigen Materials in die betreffenden Kanäle besonders leicht, beispielsweise durch Ausbrennen oder Aufschmelzen, wieder entfernen lässt.

Weitere vorteilhafte Verfahren zum Einbringen des elektrisch leitfähigen Materials in den Keramikkörper sehen das Einziehen von Drähten aus dem elektrisch leitfähigen Material vor oder alternativ auch eine chemische oder galvanische Metallisierung der Innenseite der betreffenden Kanäle. Diese Metallisierung wird bevorzugt gleichmäßig und vollständig auf die Innenseite der betreffenden Kanäle aufgebracht. Alternativ kann auch auf galvanischem Wege eine Füllung der betreffenden Kanäle mit dem elektrisch leitfähigen Material erfolgen.

Als elektrisch leitfähiges Material eignet sich besonders ein Metall wie Silber oder eine elektrisch leitfähige Keramik wie eine Verbindung der allgemeinen Zusammensetzung LₓM¹yM²_{z}O₃₊ᵥ, wobei L für bevorzugt dreiwertige Metalle wie Y, La oder andere Elemente aus der Gruppe der Lanthaniden steht, M¹ bevorzugt für zweiwertige Metalle aus der Gruppe der Erdalkalimetalle steht, aber auch ein anderes ein- oder zweiwertiges Element sein kann, und M² für ein Element aus der Gruppe der Übergangsmetalle steht. Deren Zusammensetzung wird über die Stöchiometriefaktoren x, y, z und v definiert. Bevorzugt werden Verbindungen der Art La_{0,3}Sr_{0,7}MnO₃, La_{0,5}Sr_{0,5}CoO₃ oder LaNiO₃, wie sie aus den Bereichen der Elektroden für keramische Brennstoffzellen, als magnetoresistive Oxide oder als Elektroden für ferroelektrische Speicher bekannt sind.

### Zeichnungen

Die Erfindung wird anhand der Zeichnungen und in der nachfolgenden Beschreibung näher erläutert. Es zeigt Figur 1 eine Draufsicht auf einen Schnitt durch den Keramikkörper gemäß einem ersten Ausführungsbeispiel, Figur 2 einen entsprechenden Schnitt gemäß einem zweiten Ausführungsbeispiel, Figur 3 einen Schnitt gemäß einem dritten Ausführungsbeispiel und Figur 4 einen Schnitt gemäß einem vierten Ausführungsbeispiel.

### Ausführungsbeispiele

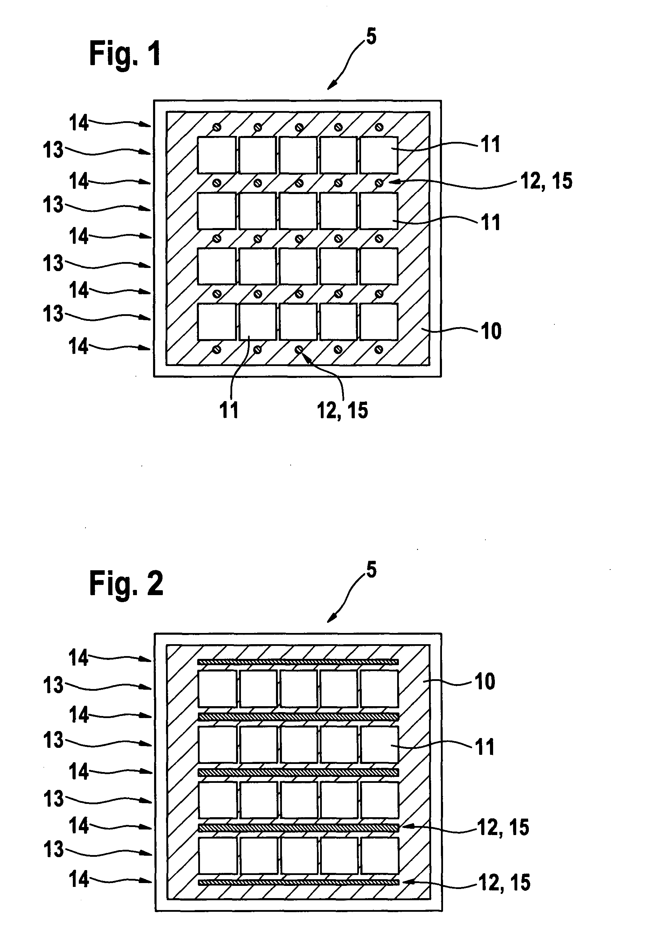

Die Figur 1 zeigt einen Schnitt durch einen Keramikkörper 10, der von einer Vielzahl von Kanälen 11, 12 durchzogen ist. Ein erster Teil 13 dieser Kanäle 11, 12 bildet bei Betrieb gasführende Kanäle 11, während ein zweiter Teil 14 der Kanäle 11, 12 elektrodenbildende Kanäle 12 sind. Die elektrodenbildenden Kanäle 12 sind weiter mit einem elektrisch leitenden Material 15, beispielsweise einem Metall oder einer elektrisch leitfähigen Keramik, gefüllt.

Die Form der Elektroden bzw. der Querschnitt der elektrodenbildenden Kanäle ist weitgehend frei wählbar, d.h. die Elektroden können rund oder, wie in Figur 2 gezeigt, flach ausgeführt sein, und somit auf eine möglichst günstige Gestaltung einer Plasmaentladung im Inneren der gasführenden Kanäle 11 hin optimiert werden. Gleiches gilt auch für die Form bzw. den Querschnitt der bei Betrieb gasführenden Kanäle 11.

Auf den Stirnseiten des Keramikkörpers 10 ist das elektrisch leitende Material 15 in den Kanälen 11 elektrisch kontaktiert, indem dort beispielsweise metallische Kontaktbahnen aufgedruckt worden sind. Zur Vermeidung von Überschlägen sind die Kontaktbahnen weiter bevorzugt mit einem keramischen Isolationsmaterial überdruckt.

Insgesamt ist somit ein Plasmareaktor 5 entstanden, bei dem durch Anlegen einer geeigneten elektrischen Spannung, beispielsweise einer Wechselspannung oder einer gepulsten Spannung, an die elektrodenbildenden Kanäle 12 und damit auch das darin befindliche elektrisch leitende Material 15 in den benachbarten Kanälen 11, über die ein Gas durch den Keramikkörper 10 hindurchgeführt ist, ein Plasma gezündet und aufrechterhalten werden kann.

Gemäß Figur 1 ist der Keramikkörper 10 ein wabenartig strukturierter monolithischer Keramikkörper beispielsweise aus Aluminiumoxid oder Zirkoniumoxid, wie er, abgesehen von den integrierten Elektroden bzw. elektrodenbildenden Kanälen 12, aus DE 198 60 460 C2 bekannt, oder wie er auch, erneut abgesehen von den integrierten Elektroden bzw. elektrodenbildenden Kanälen 12, bei der Herstellung von Katalysatoren für Kraftfahrzeuge üblich ist.

Für eine effektive Funktion des Plasmareaktors 5 ist vorteilhaft, wenn die elektrodenbildenden Kanäle 12 eine räumliche Konstanz voneinander aufweisen, und wenn das zwischen den elektrodenbildenden Kanälen 12 befindliche Dielektrikum, d.h. im erläuterten Beispiel das Material des Keramikkörpers 10, eine gleichbleibende Dicke aufweist. Daneben sollte auch eine möglichst gleichbleibende Dicke der als Entladungsspalte dienenden gasführenden Kanäle 11 für die Plasmaentladung gegeben sein.

Daher ist, auch unter dem Aspekt einer einfachen Fertigung, vorteilhaft, wenn die Kanäle 11 des ersten Teils 13 der Kanäle 11, 12 und die Kanäle 12 des zweiten Teils 14 der Kanäle 11, 12 parallel zueinander verlaufen und den Keramikkörper 10 durchqueren. Besonders günstig ist, in Figur 1 bis 4 gezeigt, eine regelmäßige, wabenartige oder schachbrettartige Struktur der Kanäle.

Bevorzugt sind weiter jedem der gasführenden Kanäle 11 zwei elektrodenbildende Kanäle 12 zugeordnet sind, mit deren Hilfe im Inneren der gasführenden Kanäle 11 das Plasma gezündet wird.

Gemäß Figur 1 weisen die gasführenden Kanäle 11 im Querschnitt einen quadratischen Grundriss auf. Die elektrodenbildenden Kanäle 12 sind so angeordnet, dass jedem der quadratischen gasführenden Kanäle 11 zwei elektrodenbildende Kanäle 12 zugeordnet sind, die sich gegenüberliegend mittig jeweils im Bereich einer Seitenfläche des Quadrates befinden. Somit wirken gemäß Figur 1 auf das Innere eines gasführenden Kanals 11 jeweils zwei Elektroden ein, die jeweils durch einen mit dem elektrisch leitenden Material 15 gefüllten Kanal 12 gebildet werden.

Die Figur 2 erläutert ein weiteres Ausführungsbeispiel, wobei abweichend von Figur 1 die elektrodenbildenden Kanäle 12 als schlitzförmige Kanäle ausgebildet sind, die mit dem elektrisch leitenden Material 15 gefüllt sind. Insofern ergeben sich plattenförmige Elektroden. In Figur 2 ist weiter dargestellt, dass jeder Zeile von benachbarten gasführenden Kanälen 11 zwei elektrodenbildende Kanäle 12 gegenüber liegend zugeordnet sind, und dass zwischen zwei Zeilen mit gasführenden Kanälen 11 ein elektrodenbildender Kanal 12 angeordnet ist.

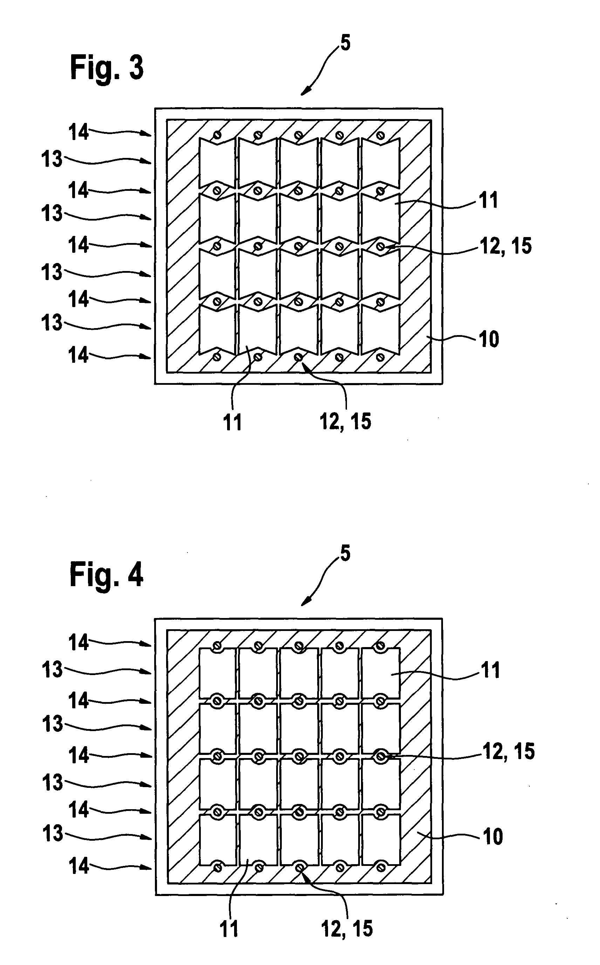

Die Figur 3 erläutert, ausgehend von dem Ausführungsbeispiel gemäß Figur 1, ein weiteres Ausführungsbeispiel. Dabei sind nun, abweichend von Figur 1, die gasführenden Kanäle 11 in Form von Rechtecken ausgebildet, die eine im Bereich der kürzeren Seiten der Rechtecke dreiecksförmig nach innen geneigte Seitenfläche aufweisen. Weiter sind in diesem Fall die elektrodenbildenden Kanäle 12 im Bereich dieser dreiecksförmig nach innen geneigten Seitenflächen angeordnet.

Die Figur 4 erläutert ein weiteres Ausführungsbeispiel für die Ausgestaltung der gasführenden Kanäle 11, wobei im Unterschied zu Figur 3 die Seitenflächen der rechteckigen gasführenden Kanäle 11 beidseits mittig eine halbkreisförmige Einbuchtung nach innen aufweisen.

Die Ausführungsbeispiele gemäß den Figuren 3 und 4 haben den Vorteil, dass sie einen vergrößerten Strömungsquerschnitt und damit einen geringeren Materialverbrauch bei gleich bleibendem Zündabstand aufweisen, d.h. es ist keine Spannungserhöhung erforderlich.

Zur Herstellung eines Plasmareaktors 5 bzw. eines Keramikkörpers 10 gemäß einem der vorangehenden Ausführungsbeispiele geht man zunächst von einem üblichen Extrusionsverfahren zur Herstellung eines grünen Keramikkörpers aus, der von einer Vielzahl von Kanälen durchzogen ist. Dieser grüne Keramikkörper wird anschließend gesintert, so dass insgesamt ein wabenartig oder schachbrettartig strukturierter monolithischer Keramikkörper entstanden ist, der beispielsweise dem Keramikkörper DE 198 60 460 C2 mit gegebenenfalls angepasster Dimensionierung entspricht. Gleichzeitig werden bei dem Herstellungsverfahren für den Plasmareaktor 5 neue Wege zur Einbringung des elektrisch leitenden Materials 15 in die elektrodenbildenden Kanäle 12 beschritten und, abweichend von der Anordnung der Kanäle in dem Keramikkörper gemäß DE 198 60 460 C2, optimierte Geometrien und Anordnungen für die elektrodenbildenden Kanäle 12 bzw. die gasführenden Kanäle 11 eingesetzt, um den Materialverbrauch für die Elektroden, d.h. das elektrisch leitende Material 15, zu reduzieren und eine erleichterte Zündung einer Plasmaentladung im Inneren der gasführenden Kanäle 11 zu gewährleisten.

Zunächst wird somit mit Hilfe eines üblichen Extrusionsverfahrens und über die Herstellung eines grünen Keramikkörpers, der zu dem Keramikkörper 10 gesintert wird, ein keramischer Monolith mit gasführenden Kanälen 11 erhalten, deren Form einem der Ausführungsbeispiele gemäß Figur 1 bis 4 entspricht, und bei dem die elektrodenbildenden Kanäle 12 gemäß einem der Ausführungsbeispiele gemäß Figur 1 bis 4 ausgebildet sind.

Danach werden die elektrodenbildenden Kanäle 12 dann zumindest teilweise, insbesondere vollständig, in ihrem Inneren mit dem elektrisch leitenden Material 15 gefüllt oder beschichtet, bevor schließlich die so erzeugten Elektroden paarweise derart miteinander verschaltet werden, dass im Inneren der gasführenden Kanäle 11, in denen bei Einsatz des Plasmareaktors 5 in einer Einrichtung zur Behandlung von Abgasen von Verbrennungsmotoren, insbesondere in einem Kraftfahrzeug, Abgas geführt wird, ein Plasma gezündet und aufrecht erhalten werden kann.

Gegenüber einem Aufbau des Plasmareaktors 5 aus einzelnen Lagen oder Platten weist das erläuterte Verfahren somit einen monolithischen Aufbau des Keramikkörpers 10 auf, bei dem keine Verbindungstechnik zur etwaigen Stapelung von Einzellagen erforderlich ist.

Daher ist das beschriebene Verfahren besonders zur schnellen und kostengünstigen Herstellung eines robusten, schüttelbeständigen Plasmareaktors 5, beispielsweise zum Einbau im Abgasstrang eines Kraftfahrzeuges, geeignet. Daneben weist der Plasmareaktor 5 einen vergleichsweise großen freien Querschnitt der gasführenden Kanäle 11 auf, und die möglichen Formen der gasführenden Kanäle 11 bzw. der elektrodenbildenden Kanäle 12 sind aufgrund des eingesetzten Extrusionsverfahrens sehr vielfältig und auch leicht veränderbar.

Schließlich ist auch der Verbrauch an elektrisch leitendem Material 15, das beispielsweise ein Edelmetall wie Silber ist, vergleichsweise gering, da das elektrisch leitende Material 15 erst nach dem Sintern des Keramikkörpers 10 in diesen eingebracht wird, d.h. im Rahmen eines sogenannten "post-firing", so dass für das elektrisch leitende Material 15 bzw. zur Elektrodeneinbringung keine hochschmelzenden bzw. teuren Edelmetalle aus der Platingruppe erforderlich sind. Zudem kann über eine entsprechende Gestaltung des Querschnittes der gasführenden Kanäle 11 bzw. der elektrodenbildenden Kanäle 12 und ihre Anordnung das bei Anlegen der elektrischen Spannung entstehende elektrische Feld in seiner Feldstärkenverteilung und Homogenität in sehr weiten Bereichen verändert und hinsichtlich einer möglichst gleichmäßigen störungsfrei brennenden Plasmaentladung im Inneren der gasführenden Kanäle 11 optimiert werden.

Erstes Ausführungsbeispiel zum Einbringen des elektrisch leitenden Materials 15 in das Innere der bereits durch Sintern des Keramikkörpers 10 angelegten elektrodenbildenden Kanäle 12 sieht vor, dass eine metallhaltige Paste, beispielsweise eine übliche Silberpaste, in die elektrodenbildenden Kanäle 12 eingesaugt, eingedrückt, durchgeblasen oder durchgesaugt wird, so dass die Paste im Inneren der Kanäle an den Wänden haftet oder die Kanäle 12 füllt. Anschließend folgt dann ein Überführen, vorzugsweise ein Einbrennen, der Paste im Inneren der Kanäle 12 zu dem elektrisch leitenden Material 15, beispielsweise Silber. Dadurch wird erreicht, dass die Kanäle 12 des zweiten Teils 14 der Kanäle 11, 12 mit der Paste auf ihren Innenseiten möglichst homogen beschichtet oder möglichst vollständig damit gefüllt sind.

Anstelle einer metallhaltigen Paste kann auch eine elektrisch leitfähige Keramik als elektrisch leitendes Material 15 eingesetzt werden. In diesem Fall wird statt einer Paste zunächst von einem Schlicker ausgegangen, der in die elektrodenbildenden Kanäle 12 eingebracht und anschließend durch Einbrennen in die elektrisch leitende Keramik überführt wird.

Zweites Verfahren zum Einbringen des elektrisch leitenden Materials 15 in den zweiten Teil 14 der Kanäle 11, 12 sieht ein temporäres, zumindest einseitiges Verschließen des ersten Teils 13 der Kanäle 11, 12 und ein Eintauchen des Keramikkörpers 10 in eine Lösung oder auch eine Suspension mit einer in das elektrisch leitende Material 15 überführbaren oder dieses enthaltenden Komponente vor.

Das temporäre Verschließen des ersten Teils der Kanäle erfolgt bevorzugt mit Hilfe eines Wachses, das nach Abschluss des Einbringens des elektrisch leitenden Materials 15 in den zweiten Teil 14 der Kanäle 11, 12 wieder entfernt, beispielsweise ausgebrannt oder aufgeschmolzen wird.

Nach dem Eintauchen des Keramikkörpers 10 in die Lösung oder Suspension erfolgt abschließend ein Überführen, insbesondere ein Einbrennen, der in das elektrisch leitende Material 15 überführbaren Komponente, so dass dieses entsteht. Dabei bildet sich eine homogene Beschichtung der Innenseite der elektrodenbildenden Kanäle 12 mit dem elektrisch leitenden Material 15 aus. Alternativ kann dieses Verfahren jedoch auch, je nach Konzentration der Lösung oder Suspension oder durch mehrfache Anwendung, dazu eingesetzt werden, die elektrodenbildenden Kanäle 12 mit dem elektrisch leitenden Material 15 zu füllen.

Ein drittes Ausführungsbeispiel zum Einbringen des elektrisch leitenden Materials 15 in die elektrodenbildenden Kanäle 12 sieht vor, in diese Drähte einzuziehen, die aus dem elektrisch leitenden Material 15 bestehen.

Ein viertes Verfahren zum Einbringen des elektrisch leitenden Materials 15 in den zweiten Teil 14 der Kanäle 11, 12 sieht schließlich eine chemische oder galvanische Metallisierung der Innenseite der betreffenden Kanäle 12 oder deren darüber erfolgende Füllung vor.

## Patentansprüche

1. Plasmareaktor mit einem Keramikkörper (10), der von einer Vielzahl von Kanälen (11, 12) durchzogen ist, wobei über einen ersten Teil (13) der Kanäle (11, 12) ein Gas durch den Keramikkörper (10) durchführbar ist, und wobei ein zweiter Teil (14) der Kanäle (11, 12) ein elektrisch leitendes Material (15) derart aufweist, dass über ein Anlegen einer elektrischen Spannung an zumindest einige der Kanäle (12) des zweiten Teils (14) der Kanäle (11, 12) ein Plasma im Inneren zumindest einiger der Kanäle (11) des zweiten Teils (13) der Kanäle (11, 12) zündbar und/oder aufrechterhaltbar ist.

2. Plasmareaktor nach Anspruch 1, **dadurch gekennzeichnet, dass** die Kanäle (11) des ersten Teils (13) der Kanäle (11, 12) parallel zueinander verlaufen und den Keramikkörper (10) durchqueren, und/oder dass die Kanäle (12) des zweiten Teils (14) der Kanäle (11, 12) parallel zueinander verlaufen und den Keramikkörper (10) durchqueren.

3. Plasmareaktor nach Anspruch 1 oder 2, **dadurch gekennzeichnet, dass** die Kanäle (12) des zweiten Teils (14) der Kanäle (11, 12) eine in Draufsicht auf den Keramikkörper (10) regelmäßige, insbesondere wabenartige oder schachbrettartige, Struktur aufweisen, und/oder dass die Kanäle (11) des ersten Teils (13) der Kanäle (11, 12) eine in Draufsicht auf den Keramikkörper (10) regelmäßige, insbesondere wabenartige oder schachbrettartige, Struktur aufweisen.

4. Plasmaraektor nach einem der vorangehenden Ansprüche, **dadurch gekennzeichnet, dass** die das elektrisch leitende Material (15) aufweisenden Kanäle (12) Elektroden bilden, wobei insbesondere jedem der Kanäle (12) des zweiten Teils (14) der Kanäle (11, 12) mindestens zwei dieser Elektroden zugeordnet sind.

5. Plasmaraektor nach einem der vorangehenden Ansprüche, **dadurch gekennzeichnet, dass** die Kanäle (12) des zweiten Teils (14) der Kanäle (11, 12) mit dem elektrisch leitfähigen Material (15), insbesondere einem Metall oder leitfähigen Keramik, gefüllt sind, dass die Kanäle (12) des zweiten Teils (14) der Kanäle (11, 12) auf ihrer Innenseite mit dem elektrisch leitfähigen Material (15) beschichtet, insbesondere oberflächlich metallisiert, sind, oder dass in die Kanäle (12) des zweiten Teils (14) der Kanäle (11, 12) Drähte aus dem elektrisch leitenden Material (15) eingebracht oder eingezogen sind.

6. Verfahren zur Herstellung eines Plasmareaktors, insbesondere nach einem der vorangehenden Ansprüche, wobei zunächst ein grüner Keramikkörper, der von einer Vielzahl von Kanälen durchzogen ist, hergestellt und zu einem Keramikkörper (10), der von einer Vielzahl von Kanälen (11, 12) durchzogen ist, gesintert wird, und wobei nach dem Sintern in einen zweiten Teil (14) der Kanäle (11, 12) in dem Keramikkörper (10) ein elektrisch leitendes Material (15) derart eingebracht wird, dass bei einem Durchführen eines Gases durch einen ersten Teil (13) der Kanäle (11, 12) in dem Keramikkörper (10) und einem Anlegen einer elektrischen Spannung an zumindest einige der Kanäle (12) des zweiten Teils (14) der Kanäle (11, 12) ein Plasma im Inneren zumindest einiger der Kanäle (11) des ersten Teils (13) der Kanäle (11, 12) erzeugbar ist.

7. Verfahren nach Anspruch 6, **dadurch gekennzeichnet, dass** der grüne Keramikkörper mittels Extrusion insbesondere in Form eines monolithischen grünen Keramikkörpers erzeugt wird.

8. Verfahren nach Anspruch 6 oder 7, **dadurch gekennzeichnet, dass** das Einbringen des elektrisch leitenden Materials (15) in den zweiten Teil (14) der Kanäle (11, 12) mittels Durchsaugen, Einsaugen, Eindrücken oder Einblasen einer insbesondere metallhaltigen Paste oder eines in eine elektrisch leitfähige Keramik überführbaren Schlickers durch diesen Teil (14) der Kanäle (11, 12) und anschließendes Überführen, insbesondere Einbrennen, der in den betreffenden Kanälen (12) haftenden Paste oder des in den betreffenden Kanälen (12) haftenden Schlickers zu dem elektrisch leitenden Material (15) erfolgt.

9. Verfahren nach Anspruch 8, **dadurch gekennzeichnet, dass** die Kanäle (12) des zweiten Teils (14) der Kanäle (11, 12) mit der Paste oder dem Schlicker auf ihren Innenseiten zumindest weitgehend beschichtet oder damit gefüllt werden.

10. Verfahren nach Anspruch 6 oder 7, **dadurch gekennzeichnet, dass** das Einbringen des elektrisch leitenden Materials (15) in den zweiten Teil (14) der Kanäle (11, 12) ein temporäres, zumindest einseitiges Verschließen des ersten Teils (13) der Kanäle (11, 12) und ein Eintauchen des Keramikkörpers (10) in eine Lösung oder Suspension mit einem in das elektrisch leitende Material (15) überführbaren oder dieses enthaltenden Komponente umfasst.

11. Verfahren nach Anspruch 10, **dadurch gekennzeichnet, dass** nach dem Eintauchen des Keramikkörpers (10) in eine Lösung oder Suspension mit einer in das elektrisch leitende Material (15) überführbaren Komponente ein Überführen, insbesondere Einbrennen, dieser Komponente zu dem elektrisch leitenden Material erfolgt.

12. Verfahren nach einem der vorangehenden Ansprüche, **dadurch gekennzeichnet, dass** die Kanäle (12) des zweiten Teils (14) der Kanäle (11, 12) auf ihrer Innenseite mit dem elektrisch leitfähigen Material (15) zumindest bereichsweise, insbesondere homogen, beschichtet oder damit gefüllt werden.

13. Verfahren nach Anspruch 10, **dadurch gekennzeichnet, dass** das temporäre Verschließen mit Hilfe eines Wachses erfolgt, das nach Einbringen des elektrisch leitenden Materials (15) in den zweiten Teil (14) der Kanäle (11, 12) insbesondere durch Ausbrennen oder Aufschmelzen wieder entfernt wird.

14. Verfahren nach Anspruch 6, **dadurch gekennzeichnet, dass** das Einbringen des elektrisch leitfähigen Materials (15) in den zweiten Teil (14) der Kanäle (11, 12) das Einziehen von Drähten mit oder aus diesem Material umfasst.

15. Verfahren nach Anspruch 6, **dadurch gekennzeichnet, dass** das Einbringen des elektrisch leitfähigen Materials (15) in den zweiten Teil (14) der Kanäle (11, 12) eine chemische oder galvanische Metallisierung eines Teils oder eines Bereiches der betreffenden Kanäle (12), insbesondere eine Beschichtung von deren Innenseiten oder eine Füllung der Kanäle (12), umfasst.

16. Verfahren nach Anspruch 6, **dadurch gekennzeichnet, dass** das Einbringen des elektrisch leitfähigen Materials (15) in den zweiten Teil (14) der Kanäle (11, 12) ein Einbringen einer elektrisch leitfähigen Keramik oder eines Metalls wie Silber umfasst.

17. Einrichtung zur Behandlung von Abgasen von Verbrennungsmotoren, insbesondere in einem Kraftfahrzeug, mit einem Plasmareaktor (5) nach einem der vorangehenden Ansprüche.
